# EUROPÄISCHE PATENTSCHRIFT

(11) **EP 2 183 144 B1**
(45) Veröffentlichungstag und Bekanntmachung des Hinweises auf die Patenterteilung: **01.02.2012**
(21) Anmeldenummer: 08785232.3
(22) Anmeldetag: 30.07.2008
(51) Int. Cl.: B61D 19/02, E05D 15/06, B66B 13/30

(54) **SCHIEBETÜR**
SLIDING DOOR
PORTIERE COULISSANTE

(30) Priorität: 31.07.2007 AT 12022007
(43) Veröffentlichungstag der Anmeldung: 12.05.2010
(73) Patentinhaber: Knorr-Bremse Gesellschaft mit beschränkter Haftung, 2340 Mödling (AT)
(72) Erfinder: PUCHEBNER, Reinhard, A-3300 Amstetten (AT)
(74) Vertreter: Schönmann, Kurt
(86) Internationale Anmeldenummer: PCT/EP2008/006287
(87) Internationale Veröffentlichungsnummer: WO 2009/015883

(56) Entgegenhaltungen:
- EP-A- 0 771 755
- US-A1- 2004 206 581

## Beschreibung

Die Erfindung bezieht sich auf eine Schiebetür bzw. Schwenkschiebetür für Fahrzeuge, Lifte u.dgl., insbesondere Schienenfahrzeuge, mit mindestens einem Türblatt, das in seinem unteren Bereich einen Führungsteil, der in eine im unteren Teil des Portals vorgesehene Führung ragt, und eine Verstärkungsplatte, die das Türblatt in einem unteren Bereich abdeckt, aufweist.

Solch eine für ist aus der EP 0771 755 A2 bekannt.

Die Führung im unteren Bereich des Portals gewährleistet, dass das Türblatt in horizontaler Richtung zur Türöffnungs- und Schließbewegung geführt ist und dabei einen vorgegebenen Verlauf einhält.

Tritte gegen den unteren Teil des Türblattes, oft Folge von Vandalismus, alkoholisierten Randalieren und extremen Gruppierungen führen immer häufiger dazu, dass das Türblatt zerstört wird und vollständig ausgetauscht werden muss, um wieder eine zuverlässige Öffnungs- und Schließbewegung zu gewährleisten. Um die Folgen derartiger Zerstörungswut gering zu halten, ist es bekannt, bei Türen eine Verstärkungsplatte im unteren Bereich des Türblattes anzubringen. Diese schützt das Türblatt, indem es durch seine Robustheit die einwirkenden Kräfte aufnimmt und gleichmäßig verteilt.

Der Nachteil einer derartigen Verstärkungsplatte, auch Kick-plate genannt, liegt jedoch darin, dass durch besonders starke Tritte eine Verformung des gesamten unteren Bereichs des Türblatts nicht verhindert werden kann, wodurch die Schiebebewegung beeinträchtigt wird.

Es besteht somit der Bedarf an einer Lösung, bei der die Schiebetüre oder Schwenkschiebetüre auch unter dem Einfluss von besonders harten Tritten soweit unbeschädigt bleibt, dass ein einwandfreier Betrieb der Türe gewährleistet bleibt. Diese Lösung soll Stabilität gewährleisten und gleichzeitig kostengünstig herstellbar sein.

Diese Ziele werden mit einer Schiebetür oder Schwenkschiebetüre der eingangsgenannten Art dadurch erreicht, dass die Verstärkungsplatte und der Führungsteil einstückig im einem Bauteil in begriert sind.

Durch diese Maßnahme wird bewirkt, dass die auf die Verstärkungsplatte ausgeübten Kräfte unmittelbar in den die Führung bildenden Portalbereich übertragen werden. Das Türblatt selbst fängt dabei keine Kräfte auf. Die Stöße werden somit auf direktem Wege in das Portal eingeleitet.

Durch die erfindungsgemäße Lösung ist nunmehr die Funktion der Kick-plate und jene der Führung des Türblatts in einem einzigen Bauteil integriert. Dies erhöht die Stabilität der Konstruktion gegenüber mutwilligen Tritten gegen den unteren Bereich des Türblatts und spart Kosten bei der Herstellung und beim Einbau. Zusätzlich erhöht die erfindungsgemäße Maßnahme die Dichtigkeit (Feuchtigkeit, Luftzug, Schmutz, Lärm) zwischen dem Wageninneren und dem Außenbereich.

Die Erfindung wird im folgenden anhand der Zeichnung näher erläutert. Dabei zeigt
die Fig. 1 eine Schiebetür eines Schienenfahrzeuges von innen,
die Fig. 2 den unteren Portalbereich einer Türe gemäß dem Stand der Technik,
die Fig. 3 den unteren Portalbereich einer erfindungsgemäßen Türe.

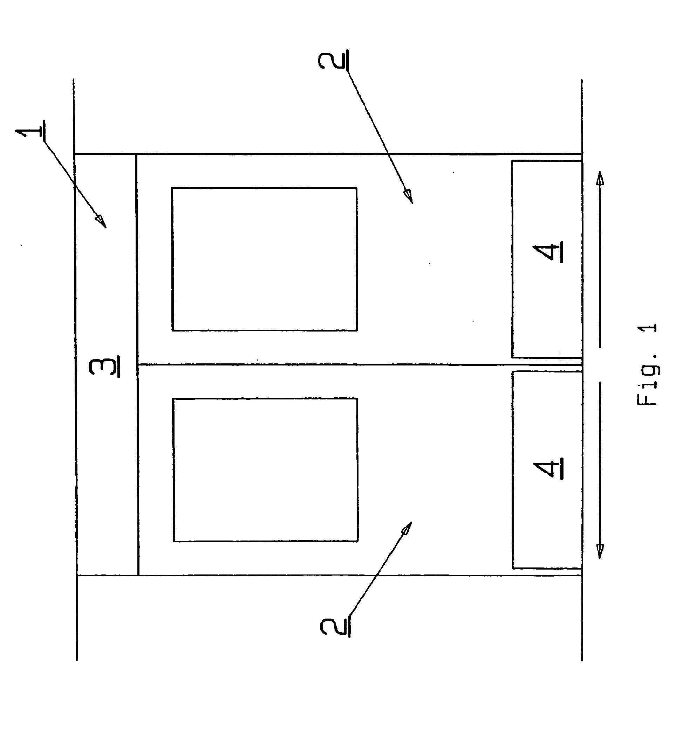

Fig. 1 zeigt eine geschlossene Schiebetür 1 eines Schienenfahrzeuges von innen. Beim Öffnen werden die Türblätter 2 in Richtung der dargestellten Pfeile bewegt. Oberhalb der Türblätter 2 befindet sich üblicherweise der Türantrieb 3 (nur schematisch dargestellt), während die Türblätter 2 im unteren Portalbereich in einer Führung geführt sind. Am unteren Bereich der Türblätter 2 sind Verstärkungsplatten 4, sogenannte Kick-plates, befestigt, vorzugsweise angeschraubt. Sie verdecken im unteren Bereich die Oberfläche des Türblattes 2 und schützen diese vor Tritten.

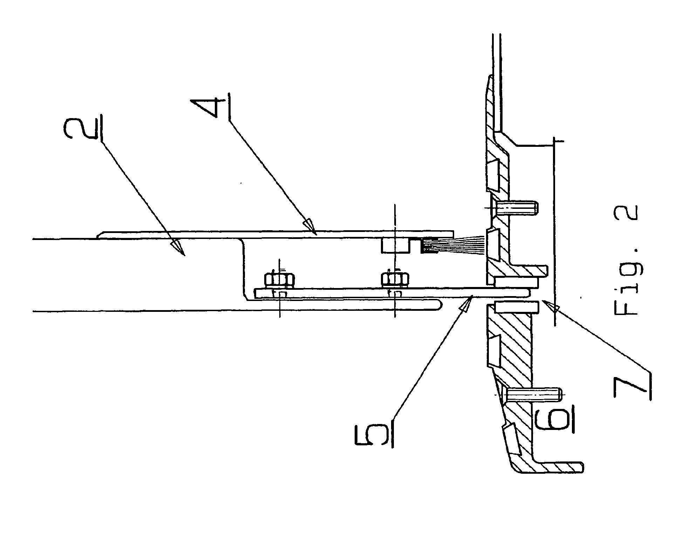

Die Figur 2 zeigt eine Türe gemäß dem Stand der Technik, bei dem die Verstärkungsplatte 4 als eigener Bauteil ausgeführt ist. Zwischen Verstärkungsplatte 4 und Führungsteil 5 gibt es keine direkte Verbindung, alle auf die Verstärkungsplatte 4 wirkenden Kräfte werden über das Türblatt 2 eingeleitet. Die Tür ist gegenüber Vandalenakten nicht ausreichend geschützt

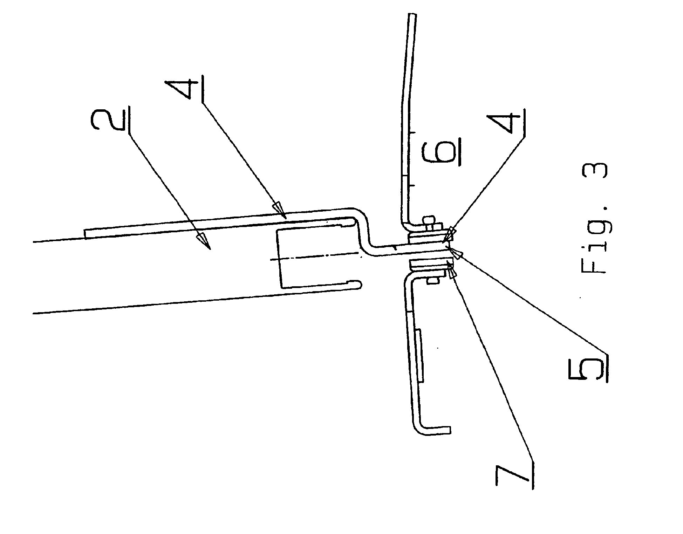

Die Fig. 3 zeigt nun ein Türblatt 2 im vertikalen Schnitt normal zur Türblattebene. Auf der dem Fahrzeuginneren zugewandten Seite des Türblatts 2 ist eine Verstärkungsplatte 4 angeordnet, die sich über einen Großteil der Türblattbreite, vorzugsweise im wesentlichen entlang der gesamten Türblattbreite erstreckt. Die Verstärkungsplatte 4 besitzt im wesentlichen rechteckige Form und die Höhe der Verstärkungsplatte 4 beträgt bevorzugt mindestens 15 cm, besonders bevorzugt mindestens 20 cm. Die im unteren Bereich des Türblattes 2 befestigte Verstärkungsplatte 4 setzt sich unterhalb des Türblattes 2 fort und geht einstückig in einen Führungsteil 5 über, der im unteren Portalbereich bzw. im Boden 6 in eine Führung 7 ragt und in Form einer Schiene vorliegt.

Die Führung 7 selbst kann mit Langlöchern ausgestattet sein, wodurch der Führungsspalt und die Position der Türe unten eingestellt werden können. Die untere Führung gewährleistet durch ihre Stabilität die Führung des Türflügels.

Im allgemeinen wird die Führung 7 wagenkastenfest sein, also vorzugsweise im Portalboden 6 eingelassen sein. Die Erfindung lässt sich jedoch ohne weiteres auch auf Türen anwenden, bei der die untere Führung der Tür nach außen schwenkbar ist. Dies kann z.B. bei Schwenkschiebetüren der Fall sein. Die Öffnungsbewegung beginnt mit einem Herausschwenken der unteren (und gegebenenfalls der oberen) Führung und wird durch das Verschieben des Türblattes entlang der Führung fortgesetzt.

Die in Form einer Rille ausgebildete Führung 7 nimmt den unteren Teil der Verstärkungsplatte 4 auf und gewährleistet dadurch die Führung des gesamten Türblattes 2 während des Öffnens und Schließens.

Im dargestellten Ausführungsbeispiel ist die Verstärkungsplatte 4 zweimal entlang einer horizontalen Linie gebogen, sodass der Führungsteil 5 zum oberen Teil der Verstärkungsplatte 4 versetzt ist. Der Führungsteil 5 ist etwa mittig zum Türblattquerschnitt angeordnet, sodass das Türblatt 2 gleichmäßig auf dem Führungsteil 5 ruht. In diesem Fall ist der Bauteil, der Verstärkungsplatte 4 und Führungsteil 5 in sich integriert, im Bereich der Türblattunterkante gekröpft ausgebildet. Die doppelt gebogene Form erhöht die Stabilität und die Steifigkeit der gesamten Konstruktion. Vorzugsweise besteht die Verstärkungsplatte mit integriertem Führungsteil aus (Nirosta-)stahl.

Es besteht selbstverstandlich auch die Möglichkeit, dass der erfindungsgemäße Bauteil, der die Verstärkungsplatte 4 und den Führungsteil 5 einstückig in sich integriert, nicht geknickt ist. Der Bauteil könnte z.B. eine ebene Platte sein, die ohne gebogen zu sein mit ihrem unteren Teil in die Führung 7 eingreift.

Es ist auch denkbar, dass der Führungsteil 5 so weit gebogen ist, dass er weiter außen sitzt und nicht genau unterhalb der Mitte der Türflügelblattdicke. Vorstellbar ist beispielsweise, dass der Führungsteil 5 mit der Außenwand des Türblatts 2 im wesentlichen fluchtet, wodurch sich kein Schmutz unterhalb des Türblatts 2 ansammeln kann.

Die Wände der als Rille ausgebildeten Führung 7 sind vorzugsweise mit Kunststoffwänden bzw. -backen ausgestattet, um die Führung zu erleichtern und Geräusche beim Öffnen und Schließen der Türe zu verringern. Dieser Puffer könnte anstelle dessen auch am Führungsteil 5 vorgesehen sein.

Der Führungsteil 5 muss nicht entlang der gesamten Breite der Verstärkungsplatte 4 ausgebildet sein. Es genügt, wenn zumindest zwei voneinander beabstandete Laschen nach unten in die Führung 7 ragen.

## Patentansprüche

1. Schiebetür bzw. Schwenkschiebetür für Fahrzeuge, Lifte u.dgl., insbesondere Schienenfahrzeuge, mit mindestens einem Türblatt (2), das in seinem unteren Bereich einen Führungsteil (5), der in eine im unteren Teil des Portals vorgesehene Führung (7) ragt, und eine Verstärkungsplatte (4), die das Türblatt (2) in einem unteren Bereich abdeckt, aufweist, **dadurch gekennzeichnet, dass** die Verstärkungsplatte (4) und der Führungsteil (5) einstückig in einem Bauteil integriert sind.

2. Schiebetür bzw. Schwenkschiebetür nach Anspruch 1, **dadurch gekennzeichnet, dass** die Verstärkungsplatte (4) um die untere Kante des Türblattes (2) gebogen ist und der Führungsteil (5) zum oberen Teil der Verstärkungsplatte (4) seitlich versetzt ist.

3. Schiebetür bzw. Schwenkschiebtür nach Anspruch 2 **dadurch gekennzeichnet, dass** der Führungsteil (5) im Querschnitt normal zur Türblattebene im wesentlichen mittig zum Türblatt (2) angeordnet ist.

## Claims

1. Sliding door or pivot sliding door for vehicles, lifts and similar, in particular rail vehicles, having at least one door leaf (2) which comprises in its lower region a guide part (5) which projects into a guide (7) provided in the lower part of the portal, and a reinforcement plate (4) which covers the door leaf (2) in a lower region, **characterised in that** the reinforcement plate (4) and the guide part (5) are integrated integrally into one component.

2. Sliding door or pivot sliding door according to claim 1, **characterised in that** the reinforcing plate (4) is bent around the lower edge of the door leaf (2) and the guide part (5) is laterally offset relative to the upper part of the reinforcing plate (4).

3. Sliding door or pivot sliding door according to claim 2, **characterised in that** the guide part (5) is arranged in cross-section normally to the door leaf plane essentially centrally relative to the door leaf (2).

## Revendications

1. Porte coulissante ou porte louvoyante-coulissante pour des véhicules, des ascenseurs et analogues, notamment des véhicules ferroviaires, comprenant un ventail (2) qui a dans sa zone inférieure une pièce (5) de guidage pénétrant dans un guidage (7) prévu dans la partie inférieure du portique et un panneau (4) de renforcement qui recouvre le ventail (2) dans une zone inférieure, **caractérisée en ce que** le panneau (4) de renforcement et la pièce (5) de guidage sont intégrés en une seule pièce en un élément de construction.

2. Porte coulissante ou porte louvoyante-coulissante suivant la revendication 1, **caractérisée en ce que** le panneau (4) de renforcement est courbé autour du bord inférieur du ventail (2) et la pièce (5) de guidage est décalée latéralement par rapport à la partie supérieure du panneau (4) de renforcement.

3. Porte coulissante ou porte louvoyante-coulissante suivant la revendication 2, **caractérisée en ce que** la pièce (5) de guidage est disposée, en section transversale, normalement au plan du ventail, en étant sensiblement au milieu par rapport au ventail (2).
